# EUROPEAN PATENT APPLICATION

(11) **EP 2 992 758 A1**
(43) Date of publication of application: **09.03.2016**
(21) Application number: 15183579.0
(22) Date of filing: 02.09.2015
(51) Int. Cl.: A01K 43/00

(54) **EGG SORTING FACILITIES**

(30) Priority: 05.09.2014 JP 2014181389
(71) Applicant: Nabel Co., Ltd., Kyoto-shi Kyoto 601-8444 (JP)
(72) Inventor: NAMBU, Kunio, Kyoto-shi, Kyoto 601-8444 (JP)
(74) Representative: Global IP Europe Patentanwaltskanzlei

(57) **Abstract**

To provide egg sorting facilities having a high efficiency of the operation. Egg sorting facilities include a produced egg warehouse (4) for preserving the produced eggs (Ep), a sorting apparatus (22) that sorts the produced eggs to be shipped from the produced egg warehouse (4), and a sorted egg warehouse (5) in which the sorted eggs sorted by the sorting apparatus are preserved. Each of the produced egg warehouse (4) and the sorted egg warehouse (5) includes article preserving shelves (40,50) having plural stages (43,53) in which the eggs are preserved. The warehouses constitute a partition wall around the sorting apparatus to form a sorting space appropriate for sorting eggs. The sorting facilities may include an arrival section (1) at which the produced eggs (Ep) arrive, a sorting section (2) provided with the sorting apparatus (22), and a shipping section (3) that ships the sorted eggs (Es). The produced egg warehouse (4) may be a wall separating the arrival section (1) and the sorting section (2). The sorted egg warehouse (5) may be a wall separating the sorting section (2) and the shipping section (3).

## Description

### Field of the Invention

The present invention is related to egg sorting facilities, particularly to egg sorting facilities having an egg preserving warehouse.

### Background

Eggs are laid by chickens in a hen house as a production farm. Then, the eggs are sorted according to physical natures such as weight, crack, dirt, internal abnormality before they are conveyed to consumers. The sorting operation is performed at egg sorting facilities called as a Grading & Packing center. The egg sorting facilities is equipped with a sorting apparatus that can automatically perform the sorting operation. Such a sorting apparatus has been known as a chicken egg sorting and packaging apparatus recited in JP 2006-051017 A, for example. The chicken egg sorting and packaging apparatus generally washes a lot of eggs transported from the hen house, and then classifies (sorts) them in size by weight, and then contains (packages) them into egg containers such as a pack and a tray for the circulation in the market.

According to conventional egg sorting facilities, the eggs which has been delivered from the production farm and arrived are sequentially sorted by the sorting apparatus, the eggs are shipped in the sorted order. By the way, the chicken eggs are "natural product, which is laid by the chickens", so that it is difficult to adjust the production amount. However, the demand amount by consumers has no relationship with the production amount in the production farm, so that the three is generally a gap between the production amount and the demand amount. For example, the demand amount of the eggs of a specific size exceeds the production amount for a specified time period, so that the eggs having the relevant size are too little. Or the production amount of the eggs of a specific size exceeds the demand amount, so that the eggs having the relevant size are too much.

In order to cope with such a gap between the production amount and the demand amount, an egg sorting and packing system of a warehouse type has been known as a chicken egg sorting and packaging apparatus recited in JP 2005-096784 A, for example. According to the sorting and packing system, the sorted eggs are preserved in the warehouse, and a required amount of the eggs having a required size are supplied according to the demand. In other words, since a warehouse arranged so as to preserve the eggs after the sorting step functions as a buffer, it is possible to ship the eggs according to the demand amount.

In addition, according to the conventional egg sorting facilities, the sorting operation is performed in response to the arrival of the eggs from the production farm, so that eggs which have not been sorted yet are not preserved for a long time at the sorting facilities. Accordingly, it is difficult to adjust the sorting operation time, i.e., the sorting amount. For example, if many eggs arrive, the sorting operation time is increased. If little eggs arrive, the sorting operation time is decreased.

Such an effect on the sorting step by the production amount of the eggs can be reduced by using a chicken egg receiving and preserving method recited in JP 2013-112519 A. According to the preserving method, the eggs arrived are preserved in the warehouse before the process (the egg breaking process in a case of JP 2013-112519 A), and the eggs can be taken out from the warehouse for the process if the process is required. In other words, a warehouse arranged before the process step functions as a buffer. Accordingly, it is easier to adjust the operation time, e.g., processing the eggs tomorrow if the process cannot be finished during a predetermined process time today, for example.

### Summary

However, even if the eggs are preserved in the warehouse after the sorting step to overcome the gap between the production amount and the demand amount, it is necessary to perform a sorting step as needed according to the arrival of the eggs in order to continue to preserve the required quantity of the eggs in the warehouse. Furthermore, even if the eggs can be preserved before the sorting step to reduce the effect by the production amount of the eggs on the sorting step, it is impossible to reduce the effect on the sorting step according to the demand amount. In other words, it is impossible to improve the efficiency of the management of the sorting facilities without comprehensively considering the production amount, the demand amount, and the sorting amount.

In addition, if the two or more warehouses are provided before and after the sorting step, it is afraid that the sorting facilities are increased in size depending on the arrangement of the warehouses, so that the previously mentioned structure affects the arrangement of the other apparatuses in the sorting facilities, and then affects the operation place for the operators and the movement of the operators, for example, thereby lowering the efficiency of the management of the sorting facilities.

The present invention was conceived in order to solve the previously mentioned problems, and a purpose of the present invention is to provide egg sorting facilities having a high efficiency of the operation.

Egg sorting facilities according an aspect of the present invention includes a produced egg warehouse configured to preserve produced eggs, a sorting apparatus configured to sort the produced eggs shipped from the produced egg warehouse, and a sorted egg warehouse configured to receive and preserve the sorted eggs sorted by the sorting apparatus. Each of the produced egg warehouse and the sorted egg warehouse includes article preserving shelves having plural rows and plural stages for preserving the eggs. The warehouses constitute partition walls around the sorting apparatus so as to define a sorting space appropriate for sorting eggs.

According to the sorting facilities of the present invention, the produced egg warehouse separates a step of egg arrival at the facilities from a step of egg sorting step at the facilities so as to function as a buffer between the steps. The sorted egg warehouse separates the egg sorting step from the egg shipping step, and functions as a buffer between these steps. Accordingly, it is possible to efficiently and optimally manage the facilities according to the arrival amount and the shipping amount by adjusting the sorting amount of the sorting apparatus and the preserved amount of the two buffers.

Furthermore, each of the produced egg warehouse and the sorted egg warehouse forms a partition wall and are arranged around a sorting apparatus which is a large and main apparatus as well as an apparatus provided in the egg sorting facilities, so that they define a sorting space appropriate for sorting eggs. Accordingly, it is possible to avoid the spatial waste of the sorting facilities, to make clear a source on which other apparatuses can be located, thereby making efficient the management of the sorting facilities in light of space.

It is preferable that the egg sorting facilities further comprise an arrival section at which the produced eggs arrives, a sorting section including the sorting apparatus, and a shipping section from which the sorted eggs are shipped. The produced egg warehouse as the partition wall separates the arrival section and the sorting section. The sorted egg warehouse as the partition wall separates the sorting section and the shipping section.

It is preferable that a part of the article preserving shelves of the produced egg warehouse close to the sorting apparatus includes at least one retrieving station from which the produced eggs are shipped. A part of the article preserving shelves of the sorted egg warehouse close to the sorting apparatus includes at least one storage station at which the sorted eggs arrive.

It is preferable that an area partitioned between the produced egg warehouse and the sorted egg warehouse is a central area having at least two-story structure. The sorting section is provided in a first story or a second story of the central area. In the produced egg warehouse or the sorted egg warehouse, one of a storage station and a retrieving station is disposed in a position corresponding to the first story, and the other is disposed in a position corresponding to the second story.

It is preferable that the egg sorting facilities further comprise an egg washing apparatus. The egg washing apparatus and the sorting apparatus are disposed in different stories.

It is preferable that two partition walls extend in the same direction and are opposed to each other, defining the sorting section.

It is preferable that two partition walls are arranged like an L, defining the sorting section.

It is preferable that three partition walls are arranged like a C, defining the sorting section.

It is preferable that four partition walls are arranged so as to define the sorting section on every four side.

The present invention provides sorting facilities having a high efficiency of the operation.

### Brief Description of the Drawings

Fig. 1 is a schematic perspective view showing an embodiment of the sorting facilities according to the present invention.
Fig. 2 is a schematic plane view of the sorting facilities in Fig. 1.
Fig. 3 (A) is a schematic plane view showing a first modification of the sorting facilities according to the present embodiment.
Fig. 3 (B) is a schematic plane view showing a second modification of the sorting facilities according to the present embodiment.
Fig. 3 (C) is a schematic plane view showing a third modification of the sorting facilities according to the present embodiment.
Fig. 4 (A) is a schematic lateral view showing a fourth modification of the sorting facilities according to the present embodiment.
Fig. 4 (B) is a schematic lateral view showing a fifth modification of the sorting facilities according to the present embodiment.
Fig. 4 (C) is a schematic lateral view showing a sixth modification of the sorting facilities according to the present embodiment.

### Detailed Description of Preferred Embodiments

Egg sorting facilities (called as "sorting facilities", hereinafter) according to an embodiment of the present invention will be explained.

The sorting facilities EB according to an embodiment of the present invention sort produced eggs Ep, which are transported from hen houses, i.e., production farms, and ship the sorted eggs Es for circulating them in the market. The produced eggs Ep transported from the production farm are examined on dirt or crack, and are sorted by weight. The sorted eggs are packaged into egg containers (called as "containers", hereinafter) such as egg packs, and then are shipped.

The eggs are sorted, for example into sized such as LL, L, M, MS, S, SS, by weight, for example. According to the present embodiment, eggs which have not been sorted yet are called as produced eggs Ep, eggs which have already been sorted are called sorted eggs Es. Sorting includes sorting eggs by dirt, crack, internal abnormality, and so on, as well as sorting eggs by weight or size.

The produced eggs Ep transported to the sorting facilities EB are first produced in a production farm (not shown), and then packaged into trays T with a predetermined number. The tray has been known as egg trays recited in JP 2013-112519 A. In addition, the egg packaging apparatus (called as "packing apparatus", hereinafter) which packages the produced eggs Ep into the trays T has been known as an egg packaging apparatus recited in JP-A-2012-229043.

The trays T, into which the predetermined number of the produced eggs Ep are packaged, are stacked with each other with a predetermined number, to form a tray group TG. A stacking apparatus which forms a tray group TG has been recited in JP H07-172581 A. Generally, the tray group TG consists of even-numbered and odd-numbered trays T which are stacked with each other in a state where they are horizontally rotated with each other by 90 degrees. The stacking apparatus, for example, stacks the six trays T in which the eggs are packaged to form one tray group TG. According to the present embodiment, stacking means stacking the trays T in which the eggs are packaged.

The tray groups TG which is formed by the stacking apparatus are loaded into a rack R for transportation with a predetermined number. The racks R are transported into a transport vehicle such as a truck, and then are transported from the production farm to the sorting facilities EB. The rack R is equipped with wheels moving on the floor surface, so that the rack R can easily move on the floor surface. Accordingly, the rack R moves on the floor surface so as to be transported into or from the other apparatuses. The racks which can be loaded with the egg tray groups and can move on the floor surface has been known as a vehicle recited in JP 2013-112519 A.

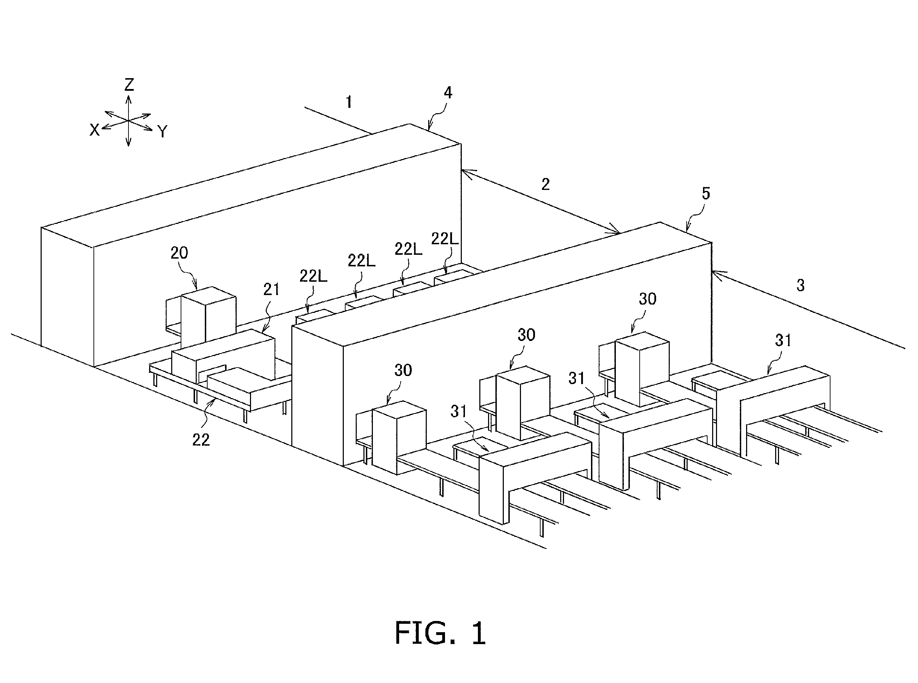

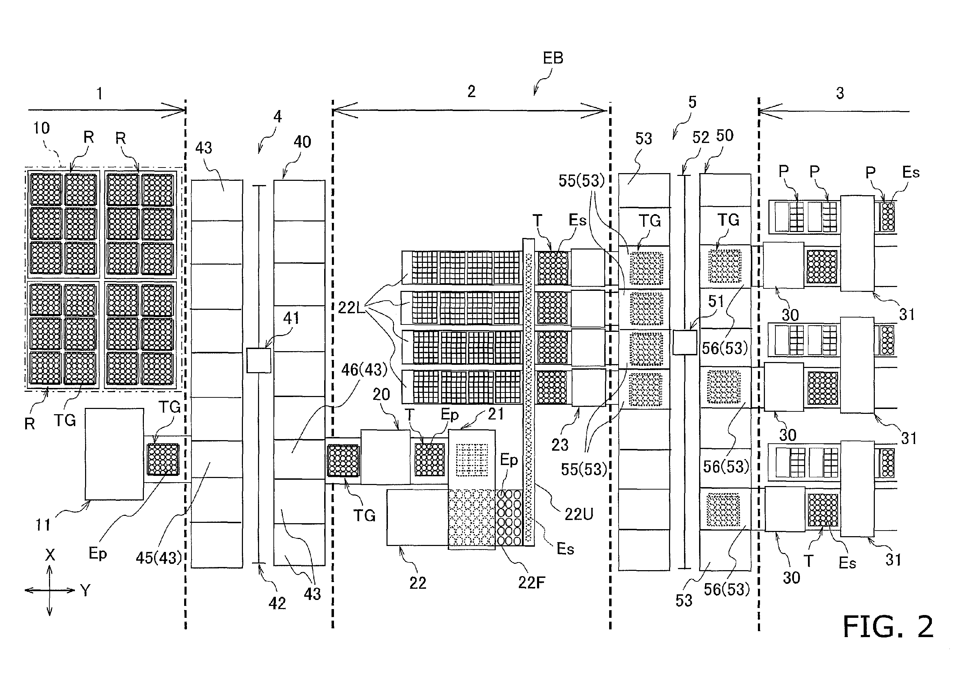

The sorting facilities EB according to an embodiment of the present invention is partitioned, as shown in Fig. 1 and Fig. 2, into an arrival section 1 into which the produced eggs Ep are transported from the production farm, a sorting section 2 which sorts the produced eggs Ep, and a shipping section 3 which contains (packages) the sorted eggs Es and ships them. Furthermore, the sorting facilities EB include a produced egg warehouse 4 configured to preserve the produced eggs Ep arrived at the arrival section 1, and a sorted egg warehouse configured to preserve the sorted eggs ES which is sorted by the sorting section 2. Each section is separated by the produced egg warehouse 4 and the sorted egg warehouse 5. According to the present embodiment, "separating the sections" means defining boundaries between the sections.

The produced egg warehouse 4 functions, as a whole, as a first partition wall separating the arrival section 1 and the sorting section 2 The produced egg warehouse 4, like a wall, extends along a first horizontal direction (both arrow X-direction in Fig. 1 and Fig. 2) and the vertical direction (in arrow Z-direction in Fig. 1). The sorted egg warehouse 5 functions, as a whole, as a second partition wall separating the sorting section 2 and the shipping section 3. The sorted egg warehouse 5, like the produced egg warehouse 4, extends along the first horizontal direction and the vertical direction. According to the present embodiment, the first partition wall and the second partition wall, in other words, the produced egg warehouse 4 and the sorted egg warehouse 5 are opposed to each other via the sorting section 2.

The arrival section 1 is equipped with a container storage field 10 for storing racks R transported to the sorting facilities EB, and a rack taking-out apparatus 11 for taking our the tray groups TG from the rack R. The container storage field 10 is a space having a high degree of freedom, where racks R with the produced eggs Ep transported from the production farm can be placed temporally at an appropriate place. The rack taking-out apparatus 11 takes out the tray group TG consisting of the stacked trays T in which the produced eggs Ep are packaged, from the racks R placed in the container storage field 10.

A rack taking-out apparatus corresponding to the rack taking-out apparatus 11 is recited as a rack taking-out apparatus in JP 2013-112519 A. The arrival section 1 is separated from the sorting section 2 by produced egg warehouse 4 as a partition wall, so that the tray groups TG taken out by the rack taking-out apparatus 11 in the arrival section 1 are sent though the produced egg warehouse 4 toward the sorting section 2.

The produced egg warehouse 4 is what is called automatic warehouse, and includes a pair of article preserving shelves 40 standing in parallel with each other, a stacker crane 41 moving between the pair of article preserving shelves 40, storing articles into the article preserving shelves 40 or retrieving the articles from the article preserving shelves 40, and guide rails 42 for guiding the stacker crane 41 moving along the pair of article preserving shelves 40.

The pair of article preserving shelves 40 extends in the first horizontal direction and the vertical direction and stand in parallel with each other. Each of the article preserving shelves 40 includes an article preserving portion 43 with plural rows in the horizontal direction and plural stages in the vertical direction, so that the article preserving shelf 40 can preserve the eggs in the plural rows and plural stages. The stacker crane 41 moves between the pair of article preserving shelves 40 along the first horizontal direction and the vertical direction, and stores the articles into the article preserving shelves 40 or retrieves the articles from the article preserving shelves 40. The guide rails 42 guide the stacker crane 41 between the pair of article preserving shelves 40 in the first horizontal direction or the vertical direction. Such an automatic warehouse is recited as article sorting facilities in JP 2000-211704 A, for example.

The article preserving shelves 40 of the produced egg warehouse 4 includes at least one storage station 45 which is connected to the rack taking-out apparatus 11 and receives the tray group TG taken out from the rack taking-out apparatus 11, and at least one retrieving station 46 which is connected to the sorting apparatus 22 and ships the tray groups TG to the sorting apparatus.

The article preserving shelves 40 of the produced egg warehouse 4 has a part of the article preserving shelves 40 close to the arrival section 1 which functions as a storage station 45. Through the storage station 45, the tray group TG is stored from the rack taking-out apparatus 11. Then, the stacker crane 41 moves the stored tray group TG to the article preserving portion 43 of an article preserving shelves 40, so that the tray group TG is preserved in the article preserving portion 43. In addition, the article preserving shelves 40 has a part close to the sorting section 2 which functions as a retrieving station 46. The tray groups TG preserved in the article preserving shelves 40 are shipped according shipping instructions through the retrieving station 46.

In other words, the produced egg warehouse 4 performs "receiving, preserving, and shipping" the tray group as one unit by the storage station 45, the article preserving portion 43, and the retrieving station 46. Such an automatic warehouse having a part of the article preserving portion which functions as a storage station or a retrieving station has been recited as a chicken egg sorting and packaging apparatus in JP 2005-096784 A. The produced egg warehouse may be equipped with a plurality of storage stations as the previously mentioned automatic warehouse.

The sorting section 2 includes a dispensing apparatus 20 that dispenses the tray group TG retrieved from the produced egg warehouse 4, a transfer apparatus 21 that transfers the produced eggs Ep packaged into the trays T dispensed by the dispensing apparatus 20, an egg sorting apparatus (called as "sorting apparatus", hereinafter) 22 that sorts the produced eggs Ep transferred from the transfer apparatus 21, and a plural stacking apparatuses 23 that stack the trays T with each other, the trays T being transported from the sorting apparatus 22 and in which the sorted eggs Es are packaged to form a tray group TG.

The dispensing apparatus 20 is connected to the retrieving station 46 of the produced egg warehouse 4. The dispensing apparatus 20 is located between the produced egg warehouse 4 and the sorting apparatus 22, receives the tray group TG shipped from the retrieving station 46, and then dispenses the tray group TG by the tray T unit. Such a dispensing apparatus has been known as a dispensing apparatus as a lifting apparatus recited in JP 2001-516686 A. According to the present embodiment, dispensing means separating a tray T from the tray group TG consisting of the stacked trays T.

The transfer apparatus 21 is connected to the dispensing apparatus 20, and receives the dispensed tray T dispensed by the dispensing apparatus 20 through the dispensing apparatus 20 and the sorting apparatus 22, takes out the produced eggs Ep packaged in the tray T, and transfers it to the sorting apparatus 22. Such a transfer apparatus has been known as an egg transfer apparatus recited in JU S57-155123 A.

The sorting apparatus 22 receives the produced eggs Ep from the transfer apparatus 21, and then sorts them by weight. Such a sorting/packaging apparatus has been recited in an automatic apparatus for sorting and packaging eggs in JP 2011-173714 A. The sorting apparatus 22 transports, as shown in Fig. 2, the produced eggs Ep transferred by the transfer apparatus 21 in plural rows. The sorting apparatus 22 includes plural row conveying units 22F that measures them in weight during the transportation, a single row conveying unit 22U that transports the sorted eggs Es measured in the plural row conveying units 22F in a single row, and plural sorting lines 22L extending in straight perpendicular to and connected to the single row conveying unit 22U.

Each of the sorting lines 22L sorts the measured eggs, and receives the sorted eggs Es corresponding to its sorting condition. In other words, the eggs which are measured in weight upstream of the sorting lines 22L of the sorting apparatus 22 are transported by the single row conveying unit 22U to the sorting lines 22L corresponding to the measurement result, and are packaged into the trays T in the sorting lines 22L. Each of the sorting lines 22L can accordingly change the corresponding sorting conditions.

Each of the sorting lines 22L transports vacant trays T from the upstream, packages the sorted eggs having a predetermined weight Es into the trays T at a position crossing the single row conveying unit 22U, and the transports the trays T in which the sorted eggs Es are transported to the sorted egg warehouse 5. The trays in which the sorted eggs are packaged at the sorting lines may have the same shape as that of the trays into which the produced eggs are packaged, but may be different trays which are appropriate for the preservation in the sorted egg warehouse 5. Such a tray has been known as an egg container recited in JP 2008-1270820 A.

Each of the stacking apparatus 23s is connected to each of the sorting lines 22L in one-to-one relation. The stacking apparatus 23 receives the trays T in which the sorted eggs Es are packaged from the corresponding the sorting line 22L, stacks the tray T sequentially to form a tray group TG. The stacking apparatus 23 may be one similar to the previously explained stacking apparatus used in the production farm. The sorting section 2 is separated from the shipping section with the sorted egg warehouse 5 as a partition wall, and the tray groups TG formed by the stacking apparatus 23 are transported toward the sorted egg warehouse 5.

The sorting section 2 may be further equipped with an egg washing and drying apparatus. The egg washing and drying apparatus is located between the transfer apparatus and the sorting apparatus. The egg washing and drying apparatus receives thee produced eggs from the transfer apparatus, washes and dries the produced eggs, and then sends the produced eggs to the sorting apparatus. Such an egg washing and drying apparatus has been known as an egg process apparatus recited in JP 2002-53217 A.

The sorted egg warehouse 5 is what is called an automatic warehouse similar to the produced egg warehouse 4. The sorted egg warehouse 5 includes a pair of article preserving shelves 50 standing in parallel, a stacker crane 51 that moves between the pair of article preserving shelves 50, transports the articles into the article preserving shelves 50 or transports the articles from the article preserving shelves 50, and guide rails 52 that guide the stacker crane 51 moving between the article preserving shelves 50.

The pair of article preserving shelves 50 extends in the horizontal direction and the vertical direction and standing in parallel. Each of the article preserving shelves 50 includes an article preserving portion 53 provided in plural rows in the horizontal direction and the plural stages in the vertical direction. The article preserving shelves 50 can preserve the eggs in the plural rows and plural stages. The stacker crane 51 moves between the pair of article preserving shelves 50 along the horizontal direction and the vertical direction, transports the articles into the article preserving portion 53 of the article preserving shelves 50 or transports the articles from the article preserving portion 53. The guide rails 52 guide the stacker crane 51 moving between the pair of article preserving shelves 50 in the horizontal direction or the vertical direction.

The sorted egg warehouse 5 has a part of the article preserving shelves 50 close to the sorting section 2 which functions as a plurality of storage stations 55. Each of the storage station 55 is located so as to have one-to-one relationship with the sorting lines 22L. Each of storage station 55 receives the tray group TG from the corresponding sorting lines 22L of the sorting apparatus 22. Then, the stacker crane 51 moves the tray groups TG to the article preserving shelves 50, and the article preserving shelves 50 preserve the produced eggs in the tray group TG.

Furthermore, the article preserving shelves 50 has a part of itself close to the shipping section 3 which functions as a plurality of retrieving stations 56. The tray group TG preserved in the article preserving shelves 50 is, according to a shipping instruction, shipped via each of the retrieving stations 56. In other words, the sorted egg warehouse 5 performs "receiving, preserving, and shipping" the tray group TG as one unit. The sorted egg warehouse 5 is an automatic warehouse which has been known, like the produced egg warehouse 4, as a chicken egg sorting and packaging apparatus recited in JP 2005-096784 A, for example.

The shipping section 3 includes a dispensing apparatus 30 that dispenses the tray groups TG shipped from the sorted egg warehouse 5, and a container apparatus 31 that contains the sorted eggs Es, which are packaged into the trays T dispensed by the dispensing apparatus 30, into containers P.

The dispensing apparatus 30 receives the tray groups TG through the retrieving station 56 of the sorted egg warehouse 5, and dispenses the tray group TG into each of the trays T. The dispensed trays T are sent toward the container apparatus 31. Such a dispensing apparatus 30 has a structure similar to that of the dispensing apparatus 20, which is located between and connected to the retrieving station 46 of the produced egg warehouse 4 and the sorting apparatus 22.

The container apparatus 31 is connected to the dispensing apparatus 30. The container apparatus 31 takes out the sorted eggs Es from each of trays T dispensed by the dispensing apparatus 30, and contains the sorted eggs Es into the containers P like egg packs. A container apparatus like the container apparatus 31 has been known as a re-packer recited in JP 2000-335515 A. The container P containing the sorted eggs Es are collected into a laminated container such as a cardboard box and are shipped.

The sorting facilities EB is further provided with an integrated control room (not shown) which controls the apparatuses and the automatic warehouses. The control room sends instructions (signals) to the control apparatuses to control the sorting facilities EB based on the arrival amount of the eggs and the shipping amount of the eggs. For example, it can send the shipping instruction to the automatic warehouse. However, the apparatuses and the automatic warehouses may have controllers which receive the instructions.

In the circulation of the eggs, generally, the arrival amount depends on the production amount of the eggs, and the shipping amount depends on the demand of the eggs. Therefore, a manager of the sorting facilities cannot adjust the arrival amount, and has to manage the modification of the shipping amount. In the sorting facilities EB according to an embodiment of the present invention, the sorted egg warehouse 5 manages the change of the shipping amount, and the produced egg warehouse 4 manages the adjustment of the sorting amount.

For example, it is possible to adjust the amount of the eggs to be retrieved from the sorted egg warehouse 5 in order to cope with the change of the demand amount such as a sudden change of the number of orders on a shipping day. In addition, for example, it is possible to set the operation time in which the produced eggs Ep arriving every day are preserved in the produced egg warehouse 4 and the sorting operation is stopped for one day in order to adjust the sorting amount. Accordingly, in the sorting apparatus EB, since the sorted egg warehouse 5 and the produced egg warehouse 4 stand in parallel, it is easy to change the sorting amount and shipping amount by the sorting facilities EB, thereby efficiently managing the sorting facilities EB.

In the other words, the sorting facilities EB include "produced egg warehouse 4 in which the produced eggs are stored and preserved, and from which the produced eggs are shipped", and the sorted egg warehouse 5 which receives and preserves the sorted eggs Es and from which the sorted eggs are shipped. Regarding distribution of the eggs that are shipped to the market from the production farm via the sorting facilities, the produced egg warehouse 4 functions as a first buffer, and the sorted egg warehouse 5 functions as a second buffer.

Since eggs are natural products, it is difficult to adjust the production amount and the demand amount in the circulation. However, according to the sorting facilities EB including the first and second buffers, with the complementary preserving function of the two buffers, it is possible to cope with the change of the production amount and the change of the shipping amount to smoothly circulate the eggs. Accordingly, the sorting facilities according to the present embodiment make it possible to efficiently and optimally manage the facilities.

In addition, the sorting facilities EB includes the produced egg warehouse 4 and the sorted egg warehouse 5 that function as partition walls and the sorted egg warehouse 5 and the produced egg warehouse 4 define the sorting section 2 by surrounding the sorting apparatus 22. Accordingly, even if dedicated partition walls are not provided, it is possible to efficiently design facilities with which the sorting operation can be smoothly achieved. For example, it is possible to provide a control room in a vacant space in the sorting section so that the operator in the control room can also monitor the sorting apparatus. It is also possible to provide a tray shed close to the partitioning wall in the sorting section to ensure a passage for the operators in the center of the sorting section. In conclusion, it becomes easy to plan an efficient management of the facilities at a design stage.

In addition, in the sorting facilities EB, a part of the article preserving shelves of the produced egg warehouse 4 and the sorted egg warehouse 5 is used as a storage station or a retrieving station, and the retrieving station 46 of the produced egg warehouse 4 and the storage station 55 of the sorted egg warehouse 5 are connected to the sorting apparatus. Accordingly, it is possible to select positions of the retrieving station of the produced egg warehouse and the storage station of the sorted egg warehouse according to the layout of the sorting apparatus at the stage of designing the sorting facilities, i.e., freedom in design of the sorting facilities becomes higher.

Although according to the present embodiment, what is called sorting facilities having an off-line system is assumed in which the produced eggs are transported from the production farm, it is possible to employ what is called sorting facilities having an in-line system in which the production farm and the sorting facilities are constructed adjacent with each other, and the production farm and the arrival section of the sorting facilities are connected with each other via a conveyor. The sorting facilities according to the present embodiment can be used as sorting facilities having an in-line system. In this case, the produced eggs transported from the production farm by the conveyor are packaged into the trays by the packing apparatus, the trays in which the produced eggs are packaged are stacked with each other by the stacking apparatus to form a tray group, and the tray group is transported into the storage station of the produced egg warehouse.

In addition, although the produced egg warehouse and sorted egg warehouse performs storing, preserving and retrieving the eggs by the group unit, a pallet on which a plurality of tray groups are loaded can be used, for example , and it can perform storing, preserving, and retrieving the eggs by the pallet unit.

Next, modifications of the sorting facilities according to the present invention will be explained. In the explanation about the modifications, sections of the sorting facilities and the layout of the sorting apparatus will be mainly explained, the layout of the unexplained apparatuses and so on may be accordingly changed according to the layout of the sections and the sorting apparatus as well as functions of the facilities and the apparatuses.

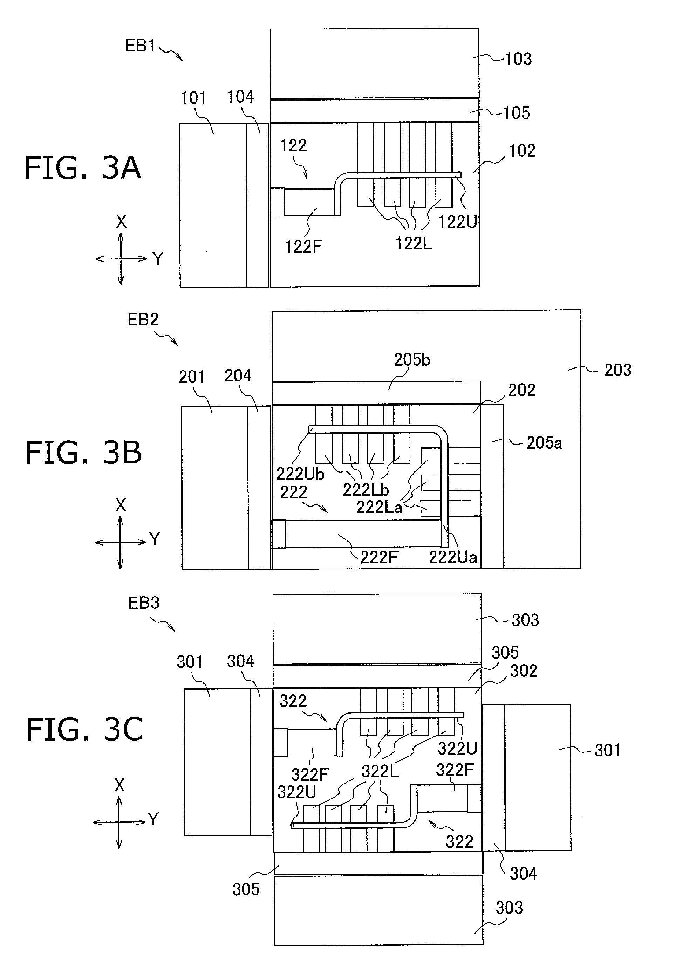

Sorting facilities EB1 according to a first modification includes, as shown in Fig. 3 (A), like the sorting facilities EB of the embodiment, a produced egg warehouse 104 and a sorted egg warehouse 105. The produced egg warehouse 104 functions as a first partition wall that separates the arrival section 101 and a sorting section 102. The sorted egg warehouse 105 functions as a second partition wall that separates the sorting section 102 and a shipping section 103.

However, compared to the embodiment in which the both of the first and second partition walls extend in the first horizontal direction and are opposed to each other, the produced egg warehouse 104 extends in the first horizontal direction (both arrow X-direction in Fig. 3 (A)), and the sorted egg warehouse 105 extend in the second horizontal direction (arrow Y-direction in Fig. 3 (A)) according to the first modification, so that the first and second partition walls are arranged like an L, defining the sorting section 102.

Since a plural row conveying apparatus 122F is connected to a retrieving station which is a part of the article preserving portion of the produced egg warehouse 104, the plural row conveying apparatus 122F extends in a second horizontal direction perpendicular to the first horizontal direction in which the produced egg warehouse 104 extends. Since sorting lines 122L are connected to a storage station which is a part of the article preserving portion of the sorted egg warehouse 105, the sorting lines 122L extend in the first horizontal direction perpendicular to the second horizontal direction in which the sorted egg warehouse 105 extends.

Corresponding to the previously mentioned structure, a sorting apparatus 122 used in the sorting facilities EB1 according to the first modification is what is called a sorting apparatus having a straight shape, and the plural row conveying apparatus 122F and a portion of the single row conveying unit 122U crossing the sorting lines 122L extend in the same direction. Since the sorting lines 122L of the sorting apparatus extend in a direction perpendicular to the single row conveying unit 122U, the sorting lines 22L extend in a direction perpendicular to the plural row conveying apparatus 122F.

Sorting facilities EB2 according to a second modification includes one produced egg warehouse 204 and two sorted egg warehouses 205a, 205b. The produced egg warehouse 204 functions as a first wall that separates an arrival section 201 and a sorting section 202. The first sorted egg warehouse 205a and the second sorted egg warehouse 205b function as second and third partition walls that separate the sorting section 202 and a shipping section 203.

According to the second modification, the shipping section 203 has a grand space having an L-shape extending along the second and third partition walls. The produced egg warehouse 204 and the first and second sorted egg warehouses 205a, 205b are arranged like a C, defining the sorting section 202.

According to a sorting apparatus 222 used in the sorting facilities EB2, a single row conveying unit 222U has a shape of L, including a first single row unit 222Ua extending in a direction perpendicular to a plural row conveying units 222F, and a second single row apparatus 222Ub continuous with the first single row unit 222Ua and extending in the same direction as that of the plural row conveying units 222F.

Since the plural row conveying apparatus 222F is connected to a retrieving station as a part of the article preserving portion of the produced egg warehouse 204, the plural row conveying apparatus 222F extends in the second horizontal direction perpendicular to the first horizontal direction in which the produced egg warehouse 204 extends. Since sorting lines 222La connected to the first single row apparatus 222Ua are connected to the storage station as a part of the article preserving portion of the sorted egg warehouse 205a, the sorting lines 222La extend in the second horizontal direction perpendicular to the first horizontal direction in which the sorted egg warehouse 205a extends. In addition, since the sorting lines 222Lb connected to the second single row apparatus 222Ub are connected to a storage station as a part of the article preserving portion of the sorted egg warehouse 205b, the sorting lines 222Lb extend in the first horizontal direction perpendicular to the second horizontal direction in which the sorted egg warehouse 205b extends.

Sorting facilities EB3 according to a third modification include two produced egg warehouses 304 and two sorted egg warehouses 305. The two produced egg warehouses 304 function as a first and a second partition walls that separate an arrival section 301 and a sorting section 302, and the two sorted egg warehouses 305 function as a third and a fourth partition walls that separate the sorting section 302 and a shipping section 303. Each of the two produced egg warehouse 304 and the two sorted egg warehouses 305 are arranged like an L.

According to the third modification, each of the arrival section 301 and the shipping section 303 is a ground space along the partition walls. The two produced egg warehouses 304 and the two sorted egg warehouses 305 are arranged so as to surround the sorting apparatus on every four side, defining the sorting section 302.

The sorting facilities EB3 according to the third modification include two sorting apparatuses 322, unlike the embodiment and the first and second modifications, and is arranged in a point symmetry in a planar manner. Each of the sorting apparatuses 322 is what is called a sorting apparatus having a straight shape. Plural row conveying apparatus 322F and a part of a single row conveying unit 322U crossing sorting lines 322L extend in the same direction. Since the sorting lines 322L of each of the sorting apparatuses extend in a direction perpendicular to the single row conveying unit 322U, the sorting lines 322L extend in a direction perpendicular to the plural row conveying apparatus 322F.

Since the plural row conveying apparatus 322F of each of the sorting apparatus 322 is connected to a retrieving station as a part of the article preserving portion of the corresponding produced egg warehouse 304, the plural conveying apparatus 322F extends in a second horizontal direction (both arrow Y-direction in Fig. 3 (C)) perpendicular to a first horizontal direction (both arrow X-direction in Fig. 3 (C)) in which the produced egg warehouse 304 extends. Since the sorting lines 322L is connected to a storage station as a part of the article preserving portion of the sorted egg warehouses 305a, 305b, the sorting lines 322L extend in the first horizontal direction perpendicular to the second horizontal direction in which the sorted egg warehouses 305a, 305b extend.

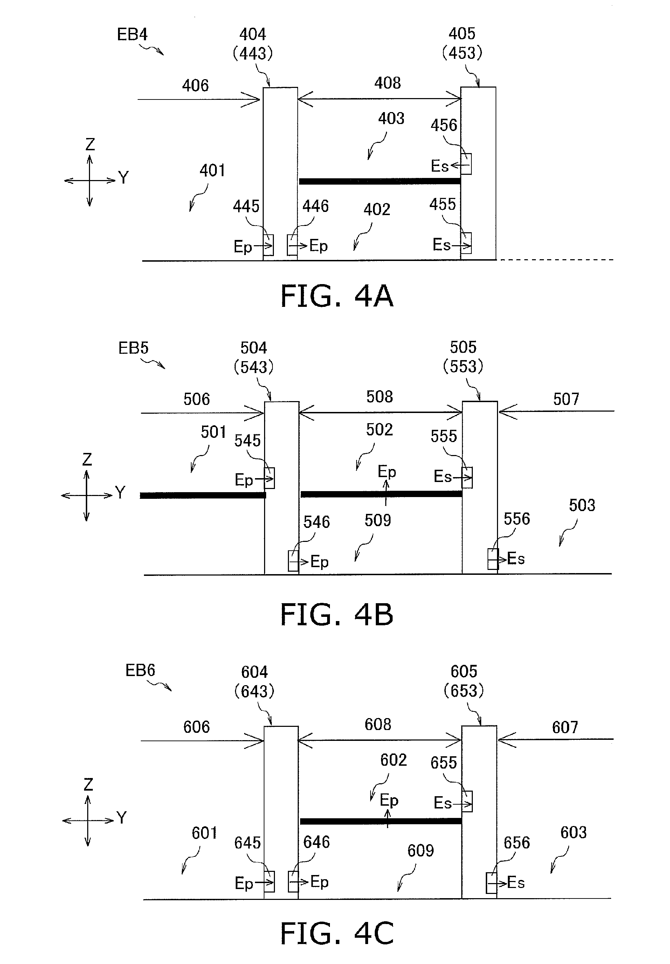

Next, fourth to sixth modifications will be explained. Sorting facilities according to these modifications have a two-story structure as shown in Fig. 4, in contrast with the embodiment and the first to third modifications which employ one-story structure. Each of the warehouses extends upward higher than a position corresponding to the second story portion. However, the sorting facilities may have at least two-story structure, and a warehouse extending in the vertical direction may be provided corresponding to the previously mentioned structure.

Sorting apparatus EB4 according to a fourth modification has, as shown in Fig. 4 (A), like the sorting facilities EB in the embodiment, a produced egg warehouse 404 that functions as a first partition wall and a sorted egg warehouse 405 that functions as a second partition wall. The first partition wall and the second partition wall are opposed to each other. However, in the sorting facilities EB4, unlike the sorting facilities EB, a central area 408 in Fig. 4(A) partitioned by the first and second partition walls has a two-story structure.

The sorting facilities EB4 includes an arrival section 401, a sorting section 402, and a shipping section 403, as in the sorting facilities EB. The arrival section 401 is located in a first story portion of a left area 406 positioned on a left side of Fig. 4 (A), the sorting section 402 is positioned in the first story of the central area 408 positioned in the center, the shipping section 403 is positioned in the second story of the central area 408. Accordingly, the sorting facilities EB4 have a building area which is two thirds of that of the sorting facilities EB1.

According to the present modification, the produced egg warehouse 404 includes a storage station 445 and a retrieving station 446 in a part of the article preserving shelves 443 corresponding to the first story portion. The sorted egg warehouse 405 includes a storage station 455 in a part of the article preserving shelves 453 corresponding to the first story portion, and a retrieving station 456 in a part of the article preserving shelves 453 corresponding to the second story portion.

The produced eggs Ep that have arrived at the arrival section 401 are sent to the sorting section 402 through the produced egg warehouse 404, are sorted at the sorting section 402 to be sorted eggs Es. The sorted eggs Es are sent from the sorting section 402 to the shipping section 403 through the sorted egg warehouse 405.

Sorting facilities EB5 according to a fifth modification includes, as shown in Fig. 4 (B), like the sorting facilities EB in the embodiment, a produced egg warehouse 504 that functions as a first partition wall, and a sorted egg warehouse 505 that functions as a second partition wall. The first partition wall and the second partition wall are opposed to each other. However, in the sorting facilities EB5, unlike the sorting facilities EB, a left area 506 positioned on a left side of Fig. 4 (B) and a central area 508 positioned in the center, which are separated by the first and second partition walls, have a two-story structure.

The sorting facilities EB5 include an egg washing section 509 as well as an arrival section 501, a sorting section 502 and a shipping section 503 as those in the sorting facilities EB. The egg washing section 509 includes an egg washing apparatus (not shown) that washes the produced eggs Ep. Such a washing apparatus has been known as an egg process apparatus recited in JP 2002-53217 A.

The arrival section 501 is positioned in a second story portion of the left area 506, the sorting section 502 is positioned in a second story portion of the central area 508, the shipping section 503 is positioned in the first story portion of a right area 507 located on a right side, and the egg washing section 509 is positioned in the first story portion of the central area 508.

According to the present modification, the sorted egg warehouse 504 has a storage station 545 in a part of the article preserving shelves 543 corresponding to the second story portion, and a retrieving station 546 in a part of the article preserving shelves 543 corresponding to the first story portion. The sorted egg warehouse 505 includes a storage station 555 in a part of the article preserving shelves 533 corresponding to the second story portion, and a retrieving station 556 in a part of the article preserving shelves 553 corresponding to the first story portion.

The produced eggs Ep that have arrived at the arrival section 501 are sent to the egg washing section 509 through the produced egg warehouse 504. The produced eggs Ep sent to the egg washing section 509 are washed by the egg washing apparatus, and then are sent to the sorting section 502. Regarding the movement of the eggs from the egg washing section to the sorting section, the eggs which are washed by the egg washing apparatus in the egg washing section are packaged into the trays temporarily, and the trays in which the eggs are packaged are stacked with each other to form tray groups, each of the tray groups is moved by an elevation apparatus such as an elevator to the sorting section.

However, it is possible to directly move the eggs in the vertical direction using sending-back apparatus used in an apparatus for washing farm and livestock products recited in JP 2013-94134 A. The washed produced eggs sent to the sorting section are sorted by the sorting apparatus to be sorted eggs, and then are sent to the shipping section through the sorted egg warehouse.

According to the present modification, the sorting section and the egg washing section are positioned in different stories. Recently, the egg washing apparatus becomes large so that the egg washing section and the sorting section are provided in different spaces. In this case, if the sorting section and the egg washing section are positioned in the different stories, it is possible to design wide sections with the same area, thereby easily arranging the egg washing apparatus.

Sorting apparatus EB6 according to a sixth modification includes, as shown in Fig. 4 (C), like the sorting apparatus EB of the embodiment, a produced egg warehouse 604 that functions as a first partition wall and a sorted egg warehouse 605 that functions as a second partition wall. The first partition wall and the second partition wall are opposed to each other. However, the sorting facilities EB6 has, unlike the sorting facilities EB, a two-story structure of the central area 608 positioned in the center of Fig. 4 (C) separated by the first and second partition walls.

The sorting facilities EB6 include an egg washing section 609 as in the sorting facilities EB5 as well as an arrival section 601, a sorting section 602, and a shipping section 603 as in the sorting facilities EB. The arrival section 601 is positioned at a first story portion of a left area 607 positioned on a left side in Fig. 4 (C), the sorting section 602 is positioned at a second story portion of the central area 608, the shipping section 603 is positioned at the first story portion of the right area 607 on a right side in Fig. 4 (C), and the egg washing section 609 is positioned at the first story portion of the central area 608.

According to the present modification, the produced egg warehouse 604 includes a storage station 645 and a retrieving station 646 in a part of the article preserving shelves 643 corresponding to the first story portion. The sorted egg warehouse 605 includes a storage station 655 in a part of the article preserving shelves 653 corresponding to the second story portion, and a retrieving station 656 in a part of the article preserving shelves 653 corresponding to the first story portion.

The produced eggs Ep that have arrived at the arrival section 601 are sent to the egg washing section 609 through the produced egg warehouse 604, and are washed by the egg washing apparatus. The washed eggs are sent to the sorting section 602, and are sorted by the sorting section 602 to be sorted eggs Es. The sorted eggs Es are sent from the sorting section 602 to the shipping section 603 through the sorted egg warehouse 605.

In the sorting facilities according to the fourth to sixth modifications, the two-story structure portion is supported by columns (not shown), but the positions of the columns may be designed according to the layout of the sorting facilities, or the layout of the apparatuses and the warehouses can be adjusted if the existing facilities are changed to sorting facilities according to an embodiment of the present invention.

Since the sorting facilities shown in the fourth to sixth modifications are built in the two-story structure, the freedom in design becomes higher in that the arrival section, the sorting section, the shipping section, egg washing section and so on can be partitioned. Furthermore, a remaining section may be used as a material storage space. In addition, since the sorting facilities use a part of the article preserving shelves corresponding to the first story portion or the second story portion of each of the warehouses as a storage station or a retrieving station, the freedom in design of separating each of sections becomes higher. For example, if the storage station and the retrieving station of the produced egg warehouse or the sorted egg warehouse may be positioned in a position corresponding to different stories the stacker crane will function as an elevating apparatus for moving the eggs between the sections in the different stories.

Furthermore, in the sorting facilities, the arrival section and the sorting section are separated by the warehouse, and the sorting section and the shipping section are separated by the warehouse, and each of the warehouses have a storage station or a retrieving station in a part of the article preserving shelves, so that it is easy to plan an efficient facility management at a design stage by selecting layout of positions of the storage station and the retrieving station of each of warehouse as well as the layout of the sorting apparatus.

Accordingly, it is possible to provide a design method in which, if the positions of the arrival port of the arrival section, the shipping port of the shipping section in the sorting facilities has been decided at building time, for example, layout of the warehouse and the sorting apparatus can be changed according the previously mentioned positions so that the partition walls separate the arrival section, the sorting section, and the shipping section so as to partition the area appropriate for sorting the eggs.

The sorting facilities according to an embodiment of the present invention can make efficient the sorting step by, as shown in various modifications, modifying the layout of the arrival section, the sorting section, the shipping section, the warehouse and so on. In addition, since the shape of the sorting apparatus can be adapted to the layout of the arrival section, the sorting section, the shipping section, the warehouse and so on, it is possible to design sorting facilities having a high sorting efficiency.

Particularly, in the egg sorting facilities, the sorting apparatus is a large and main apparatus, and the produced egg warehouse and the sorted egg warehouse are located around the sorting apparatus so that the sorting space appropriate for sorting eggs can be defined. Accordingly, it is possible to avoid the spatial waste of the sorting facilities, to make clear a source in which other apparatuses are disposed, and to make efficient the sorting step in light of the space.

Although both of the produced egg warehouse and the sorted egg warehouse are explained as an automatic warehouse according to the present embodiment and modifications, only one of the warehouses may be an automatic warehouse. However, it is desirable that each of the warehouses is an automatic warehouse in order to provide the sorting facilities having a high sorting efficiency. In addition, although one produced egg warehouse is connected to one sorting apparatus according to the present embodiment and the modifications, one produced egg warehouse may be connected to at least two sorting apparatuses.

As apparent from the present embodiment and modifications, the arrival section 1 is satisfied only if it can store the produced eggs Ep into the produced egg warehouse 4. The sorting section 2 is satisfied only if it can sort the produced eggs Ep retrieved from the produced egg warehouse 4 and stores the sorted eggs Es into the sorted egg warehouse 5. The shipping section 3 is satisfied only if it can ship the sorted eggs Es retrieved from the sorted egg warehouse 5. Each of the warehouses may have cold insulating function.

The foregoing descriptions of the embodiments according to the present invention are provided as examples only, and not for the purpose of limiting the invention as defined by the appended claims and their equivalents. Thus, the scope of the invention is not limited to the disclosed embodiments.

The present invention can be applied to the construction of the sorting facilities.

### Reference Sign List

- EB: sorting facilities
- Ep: produced eggs
- Es: sorted eggs
- 1: arrival section
- 2: sorting section
- 3: shipping section
- 4: produced egg warehouse
- 5: sorted egg warehouse
- 22: sorting apparatus
- 40, 50: article preserving shelves
- 45, 55: storage station
- 46, 56: retrieving station

## Claims

1. Egg sorting facilities comprising:
a produced egg warehouse configured to preserve produced eggs;
a sorting apparatus configured to sort the produced eggs shipped from the produced egg warehouse; and
a sorted egg warehouse configured to receive and preserve the sorted eggs sorted by the sorting apparatus,
wherein
each of the produced egg warehouse and the sorted egg warehouse includes article preserving shelves having plural rows and plural stages for preserving the eggs, and
the article preserving shelves of the produced egg warehouse and the sorted egg warehouse constitute partition walls around the sorting apparatus.

2. The egg sorting facilities according to claim 1, further comprising an arrival section at which the produced eggs arrives, a sorting section including the sorting apparatus, and a shipping section from which the sorted eggs are shipped,
wherein
the produced egg warehouse as the partition wall separates the arrival section and the sorting section, and
the sorted egg warehouse as the partition wall separates the sorting section and the shipping section.

3. The egg sorting facilities according to claim 1 or 2, wherein
a part of the article preserving shelves of the produced egg warehouse close to the sorting apparatus includes at least one retrieving station from which the produced eggs are shipped, and
a part of the article preserving shelves of the sorted egg warehouse close to the sorting apparatus includes at least one storage station at which the sorted eggs arrive.

4. The egg sorting facilities according to claim 1, 2 or 3, wherein
an area partitioned between the produced egg warehouse and the sorted egg warehouse is a central area having a at least two-story structure,
the sorting section is provided in a first story or a second story of the central area, and
in the produced egg warehouse or the sorted egg warehouse, one of a storage station and a retrieving station is disposed in a position corresponding to the first story, and the other is disposed in a position corresponding to the second story.

5. The egg sorting facilities according to any one of claims 1 to 4, further comprising an egg washing apparatus,
wherein the egg washing apparatus and the sorting apparatus are disposed in different stories.
